# EUROPEAN PATENT APPLICATION

(11) **EP 2 799 123 A1**
(43) Date of publication of application: **05.11.2014**
(21) Application number: 14176009.0
(22) Date of filing: 24.06.2004
(51) Int. Cl.: B01D 27/06, B01D 46/04

(54) **Pleated air filter with reverse pulsating air flow cleaning**

(62) Divisional of application: 04755958.8
(71) Applicant: Camfil Farr, Inc., Jonesboro AR 72401 (US)
(72) Inventor: Morgan, Lee P., Jonesboro, AR 72401 (US); Larson, Jan Eric, Sodermanland (SE)
(74) Representative: Zimmermann & Partner

(57) **Abstract**

An air filter assembly (20) has a pleated filter cartridge for filtering out dust from the air, this unit being fabricated of a suitable paper material. The cartridge (16) is in the form of a receptacle having an open top (16a), a closed bottom (16b) and closed sides (16c) which run entirely there around. Pleats (21) are formed in the sides (16c) of the cartridge. The pleats (21) are separated from each other by an adhesive bead (19) which may be formed from a hot melt material. In the filtering cycle air is drawn out by a blower (15) from the inside of the cartridge thereby drawing air from the outsides through the pleated sides which filter our dirt. The filtered air is fed from the cartridge (16) to an area requiring clean air. Periodically, the filter (16) is automatically cleaned by compressed pulsating air (D) which is fed to the interior of the cartridge (16) drives through the pleated sides (21), thereby blowing off dirt accumulated on the cartridge.

## Description

This application is based on Provisional Application serial no. 60/482,241 filed on June 26, 2003.

### BACKGROUND OF THE INVENTION

### 1. Field of the Invention

This invention relates to a pleated cartridge air filter in which the pleats are separated from each other by means of beads and which includes a reverse pulse cleaner for automatically cleaning the cartridge.

### 2. Description of the Related Art.

Air filter units have been developed in the prior art, such as described in patent no. 5,512,086 issued April 30, 1996 to Glucksman, which employ pleated filter elements. The use of pleats has a distinct advantage in that it affords considerably greater filtering area. It has been found, however, that the pleats tend to bend together towards each other and thus lose their effectiveness. To obviate this problem, separator elements have been employed to keep the pleated elements separated from each other. As mentioned in Glucksman, this can take the form of a glue or other such material placed between the pleats which when it hardens forms separating beads. Such a device is described in patent no. 5,071,555 issued on December 10, 1991 to Enbom. It is to be noted that in Enbom, the filter is linear and not in the form of a container such as a cylinder. It is to be noted that in Gluckman, the cartridge is the form of a half sphere and is not in the form of a container having continuous side walls.

A problem which prior art devices have is the necessity to rather frequently replace the filter cartridges particularly where the surrounding air has considerable dirt to be filtered out. This not only involves the costs involved in installing new filters but also the possibility of not replacing the filter in time which results in dirty air being fed to the area where clean air is required. The device of the present invention solves this problem by providing automatic cleaning of the filter in response to a measurement indicating that the filter is overfilled with dirt.

### SUMMARY OF THE INVENTION

According to one embodiment an air filter is provided. The air filter includes a cylindrical pleated filter cartridge in the form of a container having an open top and a side portion fabricated of an air filter material running around the entire side of the cartridge, wherein the side portion has pleats formed therein, the side portion of having an inner and an outer wall; and hot melt glue beads separating the pleats from each other, wherein the hot melt glue beads are disposed on the inner wall of the pleats.

The device of the invention employs a filter cartridge in the form of a container having a closed bottom, an open top and sides which run completely therearound, which may be cylindrical in shape. The sides of the container are formed from a pleated paper material which may be of a polyester, cellulose, or polyester/cellulose blend material. The pleats are kept separated from each other by glue beads which are installed with melted glue which subsequently hardens. Filtering action is achieved by means of a blower which draws air upwardly out of the cartridge and in so doing draws air from the outside of the cartridge through the pleated filter element. Dirt is removed by the filter element from the air and the clean air is fed to the area where such clean air is required.

The filter is automatically cleaned as controlled by a timer in response to a pressure differential measurement indicating that the filter has over accumulated dirt and its effectiveness has substantially decreased. When a signal is received by the timer, showing a predetermined overly high pressure differential between the atmosphere and the interior of the filter, which indicates a high dirt accumulation, compressed air is fed in pulses at a predetermined pulsing rate from an air compressor into the interior of the cartridge. As controlled in response to the timer this pulsating air flow drives the dirt from the outer walls of the cartridge. When the filter is adequately cleaned, as indicated by a decrease in the pressure differential between the inside and outside of the filter, the cleaning action is terminated.

It is therefore an object of this invention to provide automatic cleaning of an air filter employing pleated filter elements;

It is a further object of this invention to assure optimum filtering action of an air filter by maintaining the filter's pleated elements in optimum filtering condition;

Other objects of the invention will become apparent in view of the following description taken in connection with the accompanying drawings

### DESCRIPTION OF THE DRAWINGS

FIG 1 is drawing of a prior art filter in which the pleated elements are not separated;
FIG 2 is a schematic illustration showing the operation of the filter unit of the device of the invention;
FIG 2A is a top plan view of the filter cartridge of FIG 2;
FIG 2B is bottom plan view of the filter cartridge of FIG 2;
FIG 3 is a schematic illustration showing the reverse pulse cleaning operation of the device of the invention; and
FIG 4 is a cutaway section showing the pleated cartridge of the device of the invention.

### DETAILED DESCRIIPTION OF THE INVENTION.

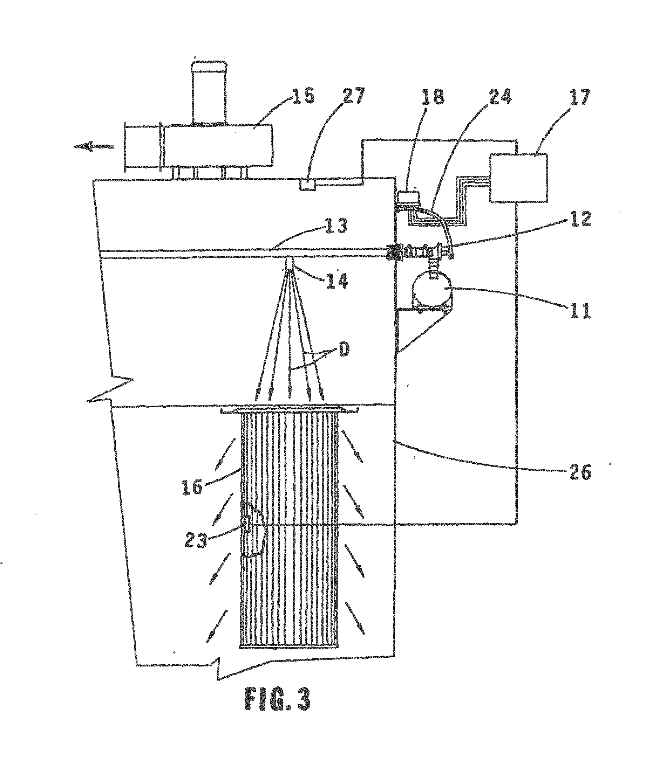

Referring to FIG 3, a pleated filter cartridge 20 of the prior art in which the pleats 21 have not been separated from each other is illustrated. Without such separation, adjoining pleats come together and the substantially greater surface area achieved with the pleats separated is not attained.

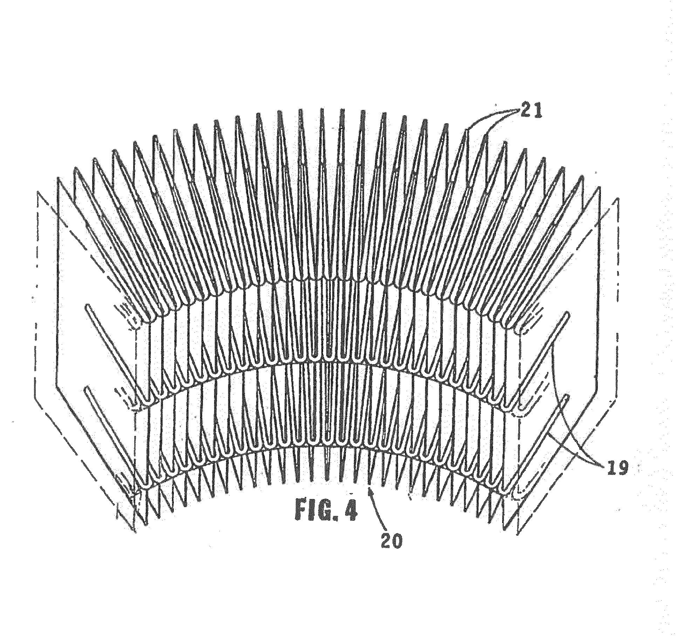

Referring now to FIG 4, the pleats 21 in the cartridge 20 of the present invention are illustrated. The pleats 21 are separated from each other by hot melt glue beads 19. In forming the pleated cartridge, the paper media is formed into a strip drawn through rolls which crease the media to prepare it to be folded into pleats 21. Before the strip is folded, the hot melt glue beads 19 are applied to one side of the strip in a manner so that they do not go all the way down in the pleat and only fill about ¾ of the depth of the pleat from the inside out. This way the outer tips of the pleats can fold into crisp tips. The beads run along the length of the strip and are spaced about one inch apart. The strip is then folded to form the pleated configuration with the hot melt beads adhering to each other back to back and finally cooling and hardening. The pleated strip is thus formed with the pleat sections separated from each other. The strip can then be wound into a cylindrical or other desired form.

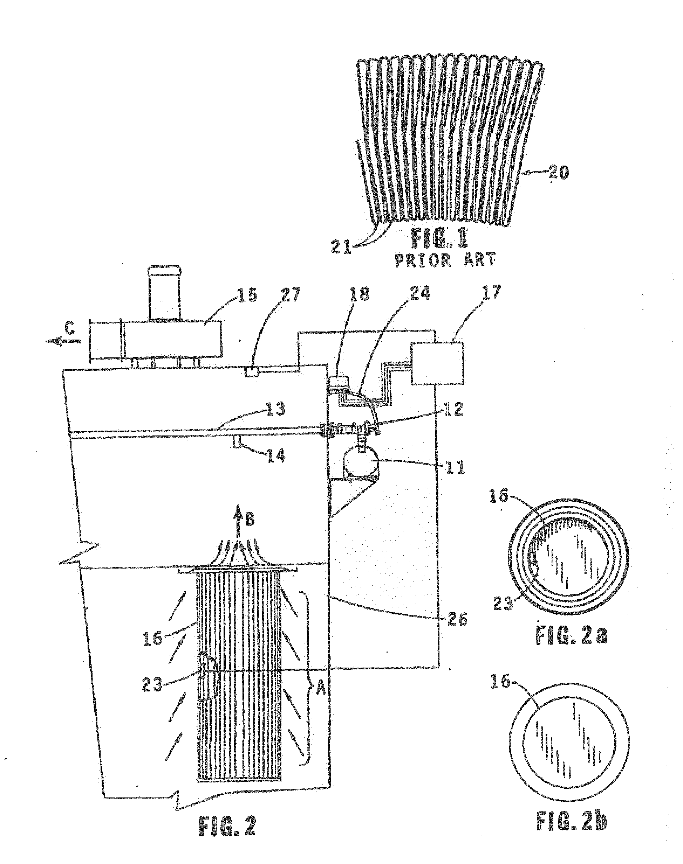

Referring now to FIG 2, the filtering operation of the device of the invention is illustrated. The filtering units are contained within housing 26. The filter cartridge 16 is cylindrical in form and has an open top 16a a closed bottom 16b and a side wall 16c in the form of a container. While in the preferred embodiment, the cartridge is cylindrical in form, it can take other shapes as long as the side wall 16c is continuous running all the way around the central cavity formed within the wall As shown in FIG 4, the surface of the side wall 16c has pleats 21 formed thereon.

Air is drawn by blower 15 into the interior of the filter cartridge 16 through the pleated outside surface thereof as indicated by arrow "A" and drawn upwardly out of the cartridge as indicated by arrow "B." Any dust in the air is trapped in the outside walls of the filter. The airflow is generated by blower 15, and the filtered air flows out from the blower to the area where it is required, as indicated by arrow "C."

Referring now to FIG 3, the automatic reverse pulse cleaning of the filter is illustrated. The filter cartridge 16 is contained within housing 26. Compressed air is stored in reservoir 11. A diaphragm valve 12 is connected to the output of the reservoir and when actuated by solenoid valves 18 feeds the stored compressed air into a blow pipe 13 that has a nozzle 14 positioned directly above the filter cartridge 16. The compressed air exits the nozzle at near sonic speed and is fed in short pulses or bursts in the nature of shock waves into the interior of the filter cartridge, as indicated by arrows "D."

An automatic timer 17 is connected to solenoid valves 18 to control both the initiation and termination of the feeding of the bursts of air and the rate at which such bursts occur. The valves 18 have an air output which is fed in tube 24 to diaphragm valve 12. When the solenoid is actuated in response to the timer control, air is fed through tube 24 from the solenoid valves, at about atmospheric pressure, to the diaphragm valve and opens the valve by virtue of the pressure differential with the compressed air in the reservoir. The timer is programmed to set the rate of the pulsations of the compressed gas, which typically is between two and twelve pulses per minute. The timer is set to respond to a predetermined high pressure differential between the inner and outer walls of the filter indicating that the filter requires cleaning. The differential pressure across the filter is measured by timer control 17 which receives pressure measurements from pressure sensor 23 which measures the pressure within the filter cartridge and pressure sensor 27 which measures the pressure on the outside of the cartridge. When the differential pressure across the filter reaches the "high" point set into the timer control, the control will actuate the solenoid valves to begin a cleaning sequence until a "low" differential point set in the timer control is reached. The timer control then will end the cleaning cycle until the high set point is again reached and the cleaning cycle will again be initiated. In this manner, the filter is automatically kept clean.

In light of the above, various embodiments have been described. According to an embodiment No. 1, an air filter assembly is provided. The air filter assembly includes:
a filter cartridge in the form of a container having an open top and a side portion fabricated of an air filter material running around the entire side of said cartridge, said side portion having pleats formed therein, and beads separating said pleats from each other;
a blower for drawing air through said cartridge from the outer walls of said side portion, said side portion filtering said air, said blower further drawing said filtered air out of said cartridge, and
means for driving pulsating pressurized air into said cartridge and out through said side portion thereby driving dirt from the outer walls of said cartridge side portion.

According to another embodiment No. 2, which can be combined with the embodiment No. 1, said mean for driving air into said cartridge and out through the side portion thereof comprises a source of compressed air and a valve connected to said compressed air source for releasing said compressed air into said cartridge.

According to another embodiment No. 3, which can be combined with the embodiment No. 2, said mean for driving air into said cartridge and out through the side portion thereof additionally comprises a timer control for opening said closing said valve at a predetermined rate.

According to another embodiment No. 4, which can be combined with the embodiment No. 3, said mean for driving air into said cartridge and out through the side portion thereof comprises a sensor for sensing a predetermined drop in the pressure of the air entering the cartridge, said sensor operating said timer control in response to the sensing of said predetermined pressure drop.

According to another embodiment No. 5, which can be combined with the embodiment No. 1, said filter cartridge is cylindrical in shape.

According to another embodiment No. 6, a method for automatically cleaning dust from the filter cartridge of an air filter wherein the filter element has an outer wall portion surrounding a hollow central portion comprising the steps of:
providing a source of compressed air; and
feeding said compressed air in a pulsating manner into the central portion of said filter cartridge,
the compressed air passing through the filter outer wall portion to drive dust therefrom.

According to another embodiment No. 7, which can be combined with the embodiment No. 6, the pulsating feeding of said compressed air into the central portion of said filter is done in response to a programmed timer.

According to another embodiment No. 8 an air filter assembly is provided. The air filter assembly comprises:
a filter cartridge in the form of a container having an open top and a side portion fabricated of an air filter material running around the entire side of said cartridge, said side portions having pleats formed therein, and beads separating said pleats from each other:
   a blower for drawing air through said cartridge from the outer walls of said side portion, said side portion filtering said air, said blower further drawing said filtered air out of said cartridge and feeding said air to a predetermined clean air area;
   a reservoir;
   compressed air stored in said reservoir;
   a valve connected to the output of said reservoir;
   a blow pipe having a nozzle connected to the output of said valve, said blow pipe feeding air into the interior of said filter cartridge, and
   an automatic timer control for effecting pulsed feeding of said compressed air at a predetermined rate.

According to another embodiment No. 9, which can be combined with the embodiment No8 1, said automatic timer is set to change the pulsing rate at which the compressed air is fed.

According to another embodiment No. 10, which can be combined with the embodiment No. 8, the air filter assembly further includes pressure sensors for sensing the pressure differential between the inside and outside walls of said filter cartridge, the outputs of said pressure sensors being fed to said automatic tuner, said automatic timer being programmed to initiate the pulsed feeding of said compressed air when said pressure differential reaches a predetermined value and to terminate said pulsed feeding when the pressure differential drops below a predetermined value.

According to another embodiment No. 11, which can be combined with the embodiment No. 9, the air filter assembly further includes pressure sensors for sensing the pressure differential between the inside and outside walls of said filter cartridge, the outputs of said pressure sensors being fed to said automatic timer, said automatic timer being programmed to initiate the pulsed feeding of said compressed air when said pressure differential reaches a predetermined value and to terminate said pulsed feeding when said pressure differential falls below a predetermined value.

While the invention has been described and illustrated in detail, this is intended by way of illustration and example only and is not to be taken by way of limitation, the scope of the invention being limited by the terms of the following claims.

## Claims

1. An air filter comprising:
a cylindrical pleated filter cartridge (16) in the form of a container having an open top (16a) and a side portion (16c) fabricated of an air filter material running around the entire side of the cartridge, wherein the side portion has pleats (21) formed therein, the side portion of having an inner and an outer wall; and
hot melt glue beads (19) separating the pleats from each other, wherein the hot melt glue beads are disposed on the inner wall of the pleats.

2. The air filter of claim 1, wherein the hot melt glue beads disposed on the inner wall of the pleats do not go all the way down in the pleat.

3. The air filter of any of claims 1 to 2, wherein the hot melt glue beads only fill about 3/4 of the depth of the pleats from the inner wall.

4. The air filter of any of claims 1 to 3, wherein the hot melt glue beads are adhered to each other back to back.

5. The air filter of any of claims 1 to 4, wherein the hot melt glue beads are adhered to each other back to back, such that the adhered hot melt glue beads separate the pleats (21) for a filtering operation and automatic reverse pulse cleaning thereof.

6. The air filter of any of claims 1 to 5, wherein the pleats are formed from folded strips, and wherein the hot melt glue beads run along a length of the strip and are spaced about one inch apart from each other.

7. An air filter assembly, comprising:
an air filter according to any of claims 1 to 6;
a blower for drawing air through said cartridge from the outer walls of said side portion, said side portion filtering said air, said blower further drawing said filtered air out of said cartridge; and
means for driving pulsating pressurized air into said cartridge and out through said side portion thereby driving dirt from the outer walls of said cartridge side portion.
